# FASCICULE DE BREVET EUROPEEN

(11) **EP 0 726 676 B1**
(45) Date de publication et mention de la délivrance du brevet: **20.09.2000**
(21) Numéro de dépôt: 96200196.2
(22) Date de dépôt: 29.01.1996
(51) Int. Cl.: H04N 7/16

(54) **Procédé de télévision payante**
Gebührenfernseh-Verfahren
Pay-TV method

(30) Priorité: 08.02.1995 FR 9501449
(43) Date de publication de la demande: 14.08.1996
(73) Titulaire: Koninklijke Philips Electronics N.V., 5621 BA Eindhoven (NL)
(72) Inventeur: Le Berre, Jacques, F-75008 Paris (FR); Persson, Bjorn, F-75008 Paris (FR)
(74) Mandataire: Charpail, François

(56) Documents cités:
- EP-A- 0 489 385
- EP-A- 0 570 785
- FR-A- 2 681 165
- FRANK BAYLIN ET AL. 'WORLD SATELLITE TV AND SCRAMBLING METHODS' Septembre 1991 , BAYLIN PUBLICATIONS , BOULDER, CO, US * page 243, colonne de gauche, ligne 35 - page 243, colonne de droite, ligne 40 *
- PROCEEDINGS OF THE INTERNATIONAL CONFERENCE ON CONSUMER ELECTRONICS (ICCE), ROSEMONT, JUNE 5 - 7, 1991, no. CONF. 10, 5 Juin 1991 INSTITUTE OF ELECTRICAL AND ELECTRONICS ENGINEERS, pages 206-207, XP 000289007 LENOIR V 'EUROCRYPT, A SUCCESSFULL CONDITIONAL ACCESS SYSTEM'

## Description

L'invention concerne un procédé de télévision payante basé sur l'emploi chez un usager d'une carte à microprocesseur, dite carte à puce, à insérer dans un organe de décodage/désembrouillage appelé décodeur, procédé dans lequel la carte à puce est utilisée pour stocker, entre autres, des données concernant les titres d'accès de l'usager, ces titres étant chargés par voie hertzienne dans chaque carte à puce d'usager à partir d'un dispositif de gestion central, qui engendre et émet des messages de gestion des titres d'accès.

On appelle titres d'accès un ensemble de données permettant d'établir qu'un usager a le droit de recevoir une émission considérée.

Elle concerne aussi un système de télévision comportant un émetteur et une pluralité d'installations de réception, une installation de réception conçue pour la réception d'émissions payantes possédant au moins un organe de décodage/désembrouillage appelé décodeur, muni d'un lecteur de carte à microprocesseur, dite carte à puce, utilisée pour stocker, entre autres, des données concernant des titres d'accès d'un usager, l'émetteur comprenant un dispositif de gestion qui engendre et émet par voie hertzienne des messages de gestion des titres d'accès.

Elle concerne enfin un dispositif de réception de télévision, muni d'un lecteur pour une carte à microprocesseur, dite carte à puce, dans lequel la carte à puce est utilisée pour stocker, entre autres, des messages de gestion des titres d'accès, émis par un émetteur, protégés par un moyen cryptographique, messages qui ne peuvent être exploités qu'en association avec la carte à puce à laquelle il sont destinés et qui contiennent entre autres un numéro d'identification du dispositif de réception, et des données concernant des titres d'accès, le dispositif de réception étant muni de moyens pour, quand il reçoit un tel message, mettre en oeuvre un processus cryptographique en association avec la carte à puce, c'est-à-dire procéder à l'authentification et au décryptage du message de gestion des titres d'accès et le charger dans sa carte à puce.

Une méthode de contrôle d'accès correspondant au préambule ci-dessus est connue notamment du système EUROCRYPT. La norme concernant ce système (SPECIFICATION DU SYSTEME D2-MAC PAQUETS, édition 1985) décrit, pages 146, 147, un tel procédé d'embrouillage.

Le besoin s'est fait sentir de distribuer à un même usager plusieurs décodeurs, avec leurs cartes à puces associées. L'obtention d'un second ou d'un troisième décodeur par un même usager peut être avantageuse en ce qui concerne le prix d'abonnement pour le second et éventuellement le troisième décodeur, pour lesquels il peut obtenir des réductions.

Il est clair qu'une telle réduction ne peut être accordée que si le second et le troisième décodeurs sont utilisés dans la même maison ou le même appartement. En principe, ce décodeur ne doit pouvoir être donné à des parents ou à des amis.

Un objet de l'invention est de procurer un procédé et un système qui rende difficile l'utilisation d'un décodeur esclave s'il n'est pas utilisé à proximité d'un décodeur maître.

Selon le procédé de l'invention :
- il est prévu en réception un décodeur dit maître et au moins un décodeur dit esclave, devant être utilisés dans une même habitation,
- le dispositif de gestion central délivre un message de gestion des titres d'accès destiné au décodeur maître et qui est exploitable exclusivement par le décodeur maître,
- ce message de gestion des titres d'accès, qui est protégé par un moyen cryptographique, contient entre autres un numéro d'identification du décodeur maître et des données concernant les titres d'accès, y compris ceux d'un décodeur esclave,
- le décodeur maître, quand il reçoit ce message, met en oeuvre un processus cryptographique en association avec la carte à puce, pour procéder à l'authentification et au décryptage du message de gestion des titres d'accès,
- et l'utilisateur place alors dans le décodeur maître une carte à puce esclave, et le décodeur maître y inscrit les titres d'accès esclaves.

L'invention est donc basée sur l'idée d'utiliser le décodeur maître comme boîte aux lettres pour les messages de gestion des titres d'accès destinés aux ensembles décodeur-carte à puce esclaves.

Les titres d'accès destinés au décodeur esclave sont de préférence renouvelés plus souvent que les titres d'accès destinés au décodeur maître, par exemple les titres d'accès destinés au décodeur esclave peuvent être renouvelés au moins chaque semaine alors que les titres d'accès destinés au décodeur maître sont renouvelés tous les mois.

Il y a avantageusement un seul message de gestion des titres d'accès destiné au décodeur maître pour mettre à jour les titres d'accès de plusieurs décodeurs esclaves.

Ainsi le dispositif de gestion ne délivre qu'un message de gestion des titres d'accès pour plusieurs récepteurs, et cela permet de se contenter d'une faible capacité de stockage dans les décodeurs (environ 100 octets).

Un système de télévision payante selon l'invention est remarquable en ce que :
- il comprend dans une même habitation un décodeur dit maître et au moins un décodeur dit esclave, destinés à être utilisés dans cette même habitation,
- le dispositif de gestion est muni de moyens pour délivrer un message de gestion des titres d'accès destiné au décodeur maître, protégé par un moyen cryptographique, message qui est exploitable exclusivement par le décodeur maître et qui contient entre autres un numéro d'identification du décodeur maître et des données concernant les titres d'accès, y compris ceux d'un décodeur esclave,
- le décodeur maître est muni de moyens pour, quand il reçoit ce message, mettre en oeuvre un processus cryptographique en association avec la carte à puce maître, pour procéder à l'authentification et au décryptage du message de gestion des titres d'accès et le charger dans la carte à puce maître, et de moyens pour inscrire des titres d'accès esclaves dans une carte esclave, lorsqu'une telle carte est placée dans le décodeur maître.

Un dispositif de réception de télévision selon l'invention est avantageusement muni de moyens pour inscrire les titres d'accès d'un décodeur esclave dans une carte à puce esclave, lorsqu'un message de gestion des titres d'accès peut contenir les titres d'accès d'un autre décodeur esclave, associé à une carte esclave.

Ces aspects de l'invention ainsi que d'autres aspects plus détaillés apparaîtront plus clairement grâce à la description suivante d'un mode de réalisation constituant un exemple non limitatif.
La figure 1 représente schématiquement un système selon l'invention.
La figure 2 représente le contenu d'un message de gestion des titres d'accès.
La figure 3 représente schématiquement une installation de réception avec un décodeur maître.

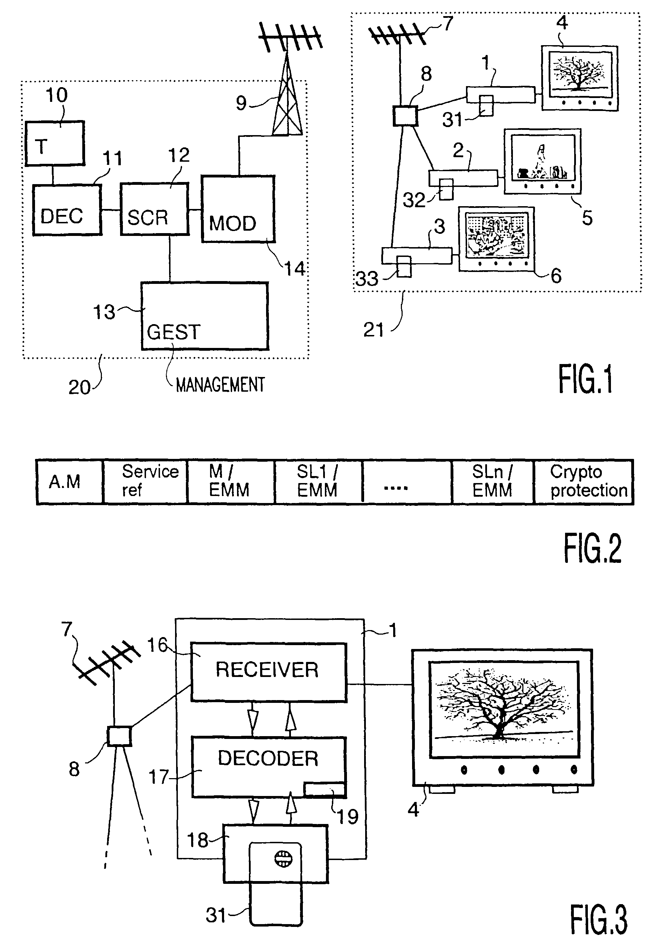

Le système de la figure 1 comprend un centre d'émission ou émetteur 20 et une quantité d'installations de réception dont une est représenté en 21.

Le centre d'émission 20 comprend une source d'images et de son 10, par exemple une caméra de télévision ou un magnétoscope, dont le signal est codé, par exemple en PAL, SECAM, NTSC, etc, ou aussi bien en codage numérique comprimé, dans un codeur 11, puis embrouillé dans une unité d'embrouillage 12, qui ajoute également dans le signal les données d'embrouillage et les éléments cryptographiques nécessaires, fournissant de façon connue aux récepteurs des clés de désembrouillage. Ces données d'embrouillage qui comportent entre autres les titres d'accès, sont engendrées par un dispositif de gestion central des titres d'accès 13.

Le signal est enfin modulé en haute fréquence par un modulateur 14 avant d'être transmis par une antenne d'émission 9, qui peut être aussi une parabole d'émission vers un satellite.

Dans une installation de réception 21, les signaux sont reçus par un organe récepteur, ici une antenne 7, qui pourrait aussi bien être un système de réception satellite ou une antenne collective ou un réseau câblé.

Un répartiteur 8 permet de répartir le signal entre trois installations, par exemple disposées dans trois pièces différentes d'une même habitation, et constituées respectivement d'un téléviseur 4 et d'un décodeur 1 avec une carte à puce 31, d'un téléviseur 5 et d'un décodeur 2 avec une carte à puce 32, d'un téléviseur 6 et d'un décodeur 3 avec une carte à puce 33. Chaque décodeur est relié au téléviseur correspondant par exemple par une connexion de péritélévision standard, permettant le transfert des signaux utiles entre le décodeur et le téléviseur. Un des décodeurs, par exemple le n° 1, est le maître, les deux autres sont esclaves.

Des mécanismes perfectionnés d'adressage et de cryptographie connus en soi sont utilisés pour assurer l'émission et la réception correcte des titres d'accès. Un procédé normalisé, par exemple "Eurocrypt", est utilisable par exemple. Le transport des titres d'accès est fait dans des messages de gestion des titres d'accès, messages dits EMM. Les données contenues dans les titres d'accès sont entre autres des références d'abonnement, des dates de validité, une valeur de crédit, etc.

On enregistre dans le dispositif de gestion 13 les usagers ayant plus d'un ensemble décodeur / carte à puce. L'identification de l'ensemble décodeur / carte à puce maître et de l'ensemble décodeur / carte à puce esclave est donc faite dans le dispositif de gestion : ce dispositif garde trace de tous les ensembles décodeur / carte à puce qui sont distribués aux usagers. Quand un premier ensemble décodeur / carte à puce est fourni à un usager, la clé de distribution de la carte à puce est enregistrée comme maître. Quand un second, puis un troisième ensemble décodeur / carte à puce est fourni au même usager, à la même adresse, la seconde clé de distribution et la troisième clé de distribution sont enregistrées comme esclaves.

Le dispositif de gestion délivre, par exemple une fois par mois, un message EMM pour renouveler les titres d'accès maîtres (un titre d'accès maître est valide un mois). Ce message EMM est reçu par voie hertzienne sur la base du numéro d'identification du décodeur, c'est-à-dire l'adresse du décodeur avec la carte 31, et passé à la carte 31 par le décodeur 1.

Le dispositif de gestion émet, par exemple une fois par semaine, un message EMM destiné au décodeur maître, et contenant en outre les données nécessaires pour chaque carte 32 et 33 afin de renouveler les titres d'accès de ces cartes, qui ne sont alors valables qu'une semaine. Les messages délivrés par le dispositif de gestion ne peuvent être exploités que par le décodeur maître : les titres d'accès esclaves ne sont jamais envoyés directement du dispositif de gestion à l'ensemble décodeur / carte à puce esclave, l'adresse et les données d'authentification qu'ils transportent correspondent au décodeur maître. Ces messages EMM sont stockés dans une mémoire locale du décodeur 1.

Il n'y a pas de différence de matériel (le terme "matériel" est pris ici par opposition au logiciel) entre respectivement un décodeur maître ou une carte à puce maître, et un décodeur esclave ou une carte à puce esclave.

Le contenu du message EMM destiné au décodeur maître, représenté sur la figure 2, contient plusieurs champs : l'adresse "A.M" du décodeur maître, une référence de service "Service ref", un champ de données pour les titres d'accès maître et esclave "M/EMM", "SL1/EMM",.. , "SLn/EMM", etc, et une donnée de protection cryptographique "crypto-protection". Le champ des titres d'accès peut aussi bien être émis en clair ou crypté.

Quand il reçoit ce message, le décodeur maître met en oeuvre un processus cryptographique connu en association avec la carte à puce, pour l'authentification et la réception des messages EMM, et s'il y a lieu leur décryptage.

L'usager possède ici trois ensembles décodeur / carte à puce chez lui. Il y a donc trois décodeurs 1, 2, 3 et trois cartes à puce 31, 32, 33.

La carte 31 attachée au décodeur 1 est enregistrée au niveau du dispositif de gestion comme carte maître. Les cartes 32, 33 respectivement attachées aux décodeurs 2, 3 sont enregistrées au niveau du dispositif de gestion comme cartes esclaves.

On peut n'avoir qu'un seul message EMM maître pour mettre à jour les titres d'accès des deux décodeurs esclaves. On peut aussi prévoir plusieurs messages, pourvu que chacun soit exploitable exclusivement par le décodeur maître, qui les retransmettra.

Le système peut aussi être simplifié lorsque toutes les cartes esclaves pour un même usager sont des clones, avec la même adresse, les mêmes clés, etc. Bien entendu on peut aussi prévoir des cartes esclaves avec des clés et des adresses différentes.

Une fois par semaine l'usager est obligé d'amener physiquement les cartes 32 et 33 jusque dans le décodeur maître 1, pour mettre à jour les titres d'accès dans les cartes esclaves.

Bien entendu, les durées de validité indiquées ci-dessus sont purement indicatives, toute autre durée peut être choisie.

La réception des titres d'accès ainsi qu'un décodage des signaux d'image et de son sont réalisés chez l'usager par un décodeur. Un décodeur maître 1 est représenté plus en détail sur la figure 3. Il est muni de moyens 16 de réception des émissions hertziennes, d'un module de décodage/désembrouillage 17, et d'un lecteur 18 de carte à puce 31.

Les moyens connus 16 de réception des émissions (syntoniseur, changement de fréquence, amplificateur, démodulateur) envoient au module de décodage/désembrouillage 17 la vidéo et le son embrouillés et des paquets de données. En retour, le module 17 renvoie les signaux désembrouillés qui sont amenés au téléviseur 4.

Le module 17 renvoie de façon connue au dispositif à carte à puce 18-31 certaines des données numériques, notamment des mots de contrôle extraits des dits paquets de données, et la carte fournit en retour un mot d'initialisation qui permet au décodeur de désembrouiller les signaux vidéo. La carte à puce contient une donnée de cryptographie appelée clé de distribution qui est propre à l'usager et qui permet de décrypter les mots de contrôle reçus par voie hertzienne sous forme cryptée, au moyen des susdits mécanismes perfectionnés connus d'adressage et de cryptographie.

Le décodeur lit dans les messages EMM qui lui sont destinés les messages de gestion des titres d'accès pour les décodeurs esclaves. Il les décrypte s'il sont cryptés, au moyen de la clé de distribution de la carte 31. Il les place dans une mémoire 19, dans laquelle il peut les relire pour les entrer dans une carte esclave, que l'usager introduit dans le lecteur 18.

## Revendications

1. Procédé de télévision payante basé sur l'emploi chez un usager d'une carte à microprocesseur, dite carte à puce, à insérer dans un organe de décodage/désembrouillage appelé décodeur, procédé dans lequel la carte à puce est utilisée pour stocker, entre autres, des données concernant les titres d'accès de l'usager, ces titres étant chargés par voie hertzienne dans chaque carte à puce d'usager à partir d'un dispositif de gestion central, qui engendre et émet des messages de gestion des titres d'accès, caractérisé en ce que
- il est prévu en réception un décodeur dit maître et au moins un décodeur dit esclave, devant être utilisés dans une même habitation,
- le dispositif de gestion central délivre un message de gestion des titres d'accès destiné au décodeur maître et qui est exploitable exclusivement par le décodeur maître,
- ce message de gestion des titres d'accès, qui est protégé par un moyen cryptographique, contient entre autres un numéro d'identification du décodeur maître et des données concernant les titres d'accès, y compris ceux d'un décodeur esclave,
- le décodeur maître, quand il reçoit ce message, met en oeuvre un processus cryptographique en association avec la carte à puce, c'est-à-dire procède à l'authentification et au décryptage du message de gestion des titres d'accès,
- et l'utilisateur place alors dans le décodeur maître une carte à puce esclave, et le décodeur maître y inscrit les titres d'accès esclaves.

2. Procédé selon la revendication 1, caractérisé en ce que les titres d'accès destinés au décodeur esclave sont renouvelés plus souvent que les titres d'accès destinés au décodeur maître.

3. Procédé selon la revendication 2, caractérisé en ce que les titres d'accès destinés au décodeur esclave sont renouvelés au moins une fois par semaine.

4. Procédé selon la revendication 1, caractérisé en ce qu'il y a un seul message de gestion des titres d'accès destiné au décodeur maître pour mettre à jour les titres d'accès de plusieurs décodeurs esclaves.

5. Système de télévision comportant un émetteur (20) et une pluralité d'installations de réception (1-6), une installation de réception conçue pour la réception d'émissions payantes possédant au moins un organe de décodage/désembrouillage appelé décodeur (19), muni d'un lecteur (18) de carte à microprocesseur (31), dite carte à puce, utilisée pour stocker, entre autres, des données concernant des titres d'accès d'un usager, l'émetteur comprenant un dispositif de gestion (13) qui engendre et émet par voie hertzienne des messages de gestion des titres d'accès, caractérisé en ce que
- il comprend dans une même habitation un décodeur dit maître et au moins un décodeur dit esclave, destinés à être utilisés dans cette même habitation,
- le dispositif de gestion (13) est muni de moyens pour délivrer un message de gestion des titres d'accès destiné au décodeur maître, protégé par un moyen cryptographique, message qui est exploitable exclusivement par le décodeur maître et qui contient entre autres un numéro d'identification du décodeur maître et des données concernant les titres d'accès, y compris ceux d'un décodeur esclave,
- le décodeur maître est muni de moyens pour, quand il reçoit ce message, mettre en oeuvre un processus cryptographique en association avec la carte à puce maître, c'est-à-dire procéder à l'authentification et au décryptage du message de gestion des titres d'accès et le charger dans la carte à puce maître, et de moyens pour inscrire des titres d'accès esclaves dans une carte esclave, lorsqu'une telle carte est placée dans le décodeur maître.

6. Dispositif de réception de télévision, muni d'un lecteur (18) pour une carte à microprocesseur (31), dite carte à puce, dans lequel la carte à puce est utilisée pour stocker, entre autres, des messages de gestion des titres d'accès, émis par un émetteur, protégés par un moyen cryptographique, messages qui ne peuvent être exploités qu'en association avec la carte à puce à laquelle il sont destinés et qui contiennent entre autres un numéro d'identification du dispositif de réception, et des données concernant des titres d'accès, le dispositif de réception étant muni de moyens pour, quand il reçoit un tel message, mettre en oeuvre un processus cryptographique en association avec la carte à puce, c'est-à-dire procéder à l'authentification et au décryptage du message de gestion des titres d'accès et le charger dans sa carte à puce, caractérisé en ce que, le message de gestion des titres d'accès pouvant contenir en outre les titres d'accès d'un autre dispositif de réception dit esclave associé à une autre carte à puce dite esclave, le dispositif de réception est muni de moyens pour inscrire les titres d'accès du dispositif de réception esclave dans la carte esclave.

## Patentansprüche

1. Gebührenfernseh-Verfahren, das auf der Verwendung einer Mikroprozessorkarte beim Anwender gründet, einer sogenannten Chipkarte, die in eine Dekodier/Entzerrungs-Einheit einzugeben ist, einen sogenannten Decoder, wobei die Chipkarte bei dem Verfahren u.a. verwendet wird, um Daten in bezug auf die Zugangsrechte des Anwenders zu speichern, und diese Rechte per Funk von einer zentralen Steuereinheit, die Nachrichten zum Steuern der Zugangsrechte erzeugt und überträgt, auf die jeweiligen Anwender-Chipkarten geladen werden, dadurch gekennzeichnet, daß
- beim Empfang ein sogenannter Hauptdecoder und ein Nebendecoder vorgesehen wird, die in derselben Wohnung verwendet werden müssen,
- die zentrale Steuereinheit eine Nachricht zum Steuern der Zugangsrechte an den Hauptdecoder überträgt, die ausschließlich vom Hauptdecoder zu verwerten ist,
- diese Nachricht zum Steuern der Zugangsrechte, die mit einem kryptographischen Verfahren geschützt ist, u.a. eine Nummer zur Identifizierung der Hauptdecoders und der Daten in bezug auf die Zugangsrechte, einschließlich derer eines Nebendecoders enthält,
- der Hauptdecoder dahingegen diese Nachricht erhält und in Verbindung mit der Chipkarte ein kryptographisches Verfahren anwendet, um die Zulässigkeit der Nachricht zum Steuern der Zugangsrechte zu prüfen und deren Entzerrung vorzunehmen,
- und dann der Anwender eine Nebenchipkarte in den Hauptdecoder eingibt, auf die der Hauptdecoder die Nebenzugangsrechte schreibt.

2. Verfahren nach Anspruch 1, dadurch gekennzeichnet, daß die für den Nebendecoder bestimmten Zugangsrechte öfters erneuert werden als die für den Hauptdecoder bestimmten Zugangsrechte.

3. Verfahren nach Anspruch 2, dadurch gekennzeichnet, daß die für den Nebendecoder bestimmten Zugangsrechte mindestens einmal pro Woche erneuert werden.

4. Verfahren nach Anspruch 1, dadurch gekennzeichnet, daß es eine einzige, für den Hauptdecoder bestimmte Nachricht zur Steuerung der Zugangsrechte gibt, um die Zugangsrechte von mehreren Nebendecodern zu aktualisieren.

5. Fernsehsystem mit einem Sender (20) und einer Vielzahl an Empfangsanlagen (1 - 6), wobei eine für den Empfang von Gebührensendungen vorgesehene Empfangsanlage mindestens eine Dekodier/Entzerrungs-Einheit aufweist, einen sogenannten Decoder (19), der mit einem Lesegerät (18) für eine Mikroprozessorkarte (31) versehen ist, einer sogenannten Chipkarte, die u.a. verwendet wird, um Daten in bezug auf die Zugangsrechte des Anwenders zu speichern, und der Sender mit einer zentralen Steuereinheit (13) versehen ist, die per Funk Nachrichten zum Steuern der Zugangsrechte überträgt, dadurch gekennzeichnet, daß
- es in einer einzigen Wohnung aus einem sogenannten Hauptdecoder und mindestens einem sogenannten Nebendecoder besteht, die zur Verwendung in einer einzigen Wohnung bestimmt sind,
- die Steuereinheit (13) dafür ausgestattet ist, um dem Hauptdecoder eine Nachricht zur Steuerung der Zugangsrechte zu übermitteln, wobei diese mit einem kryptographischen Verfahren geschützte Nachricht ausschließlich vom Hauptdecoder zu verwerten ist und u.a. eine Nummer zur Identifizierung des Hauptdecoders und die Daten in bezug auf die Zugangsrechte enthält, einschließlich derer für einen Nebendecoder,
- der Hauptdecoder dafür ausgestattet ist, um, wenn er diese Nachricht erhält, in Verbindung mit der Hauptchipkarte ein kryptographisches Verfahren anzuwenden, um die Zulässigkeit dieser Nachricht zur Steuerung der Zugangsrechte zu prüfen, ihre Entschlüsselung vorzunehmen und sie auf die Hauptchipkarte zu laden, und dafür, um die Nebenzugangsrechte auf eine Nebenkarte zu schreiben, wenn eine solche Karte in den Hauptdecoder eingeben wird.

6. Fernseh-Empfangsanlage, die mit einem Lesegerät (18) für eine Mikroprozessorkarte (31) versehen ist, einer sogenannten Chipkarte, wobei die Chipkarte u.a. verwendet wird, um die von einem Sender übertragenen Nachrichten zum Steuern der Zugangsrechte des Anwenders zu speichern, die mit einem kryptographischen Verfahren geschützt sind, wobei die Nachrichten nur zusammen mit der Chipkarte verwendet werden können, für die sie bestimmt sind und die u.a. eine Nummer zur Identifizierung der Empfangsanlage und die Daten in bezug auf die Zugangsrechte enthält, wobei die Empfangsanlage dafür vorgesehen ist, um beim Erhalt einer solchen Nachricht in Verbindung mit ihrer Chipkarte ein kryptographisches Verfahren anzuwenden, d.h. die Zulässigkeit der Nachricht zum Steuern der Zugangsrechte zu prüfen und sie auf die Chipkarte zu laden, dadurch gekennzeichnet, daß die Steuernachricht für die Zugangsrechte zudem die Zugangsrechte für eine andere, sogenannte Nebenempfangsanlage in Verbindung mit einer anderen, sogenannten Nebenchipkarte enthalten kann, wobei die Empfangsanlage dafür vorgesehen ist, um die Zugangsrechte der Nebenempfangsanlage auf die Nebenkarte zu schreiben.

## Claims

1. A pay-TV method based on the use at a user's place of a microprocessor card referred to as smart card to be inserted into a decoding/descrambling member referred to as decoder, in which method the smart card is used for storing, inter alia, data relating to the entitlements of the user, said entitlements being loaded over the air into each user smart card from a central management device which generates and transmits entitlement management messages, characterized in that
- a master decoder and at least one slave decoder are arranged at the receiver end, to be used in one and the same dwelling,
- the central management device supplies an entitlement management message which is intended for the master decoder and can be exploited only by the master decoder,
- this entitlement management message, which is protected by a cryptographic means, contains, inter alia, an identification number of the master decoder and data relating to the entitlements and comprising those of a slave decoder,
- the master decoder starts a cryptographic process in association with the smart card when it receives this message for authenticating and decrypting the entitlement management message,
- and the user then inserts a slave smart card into the master decoder and the master decoder writes the slave entitlements on said card.

2. A method as claimed in claim 1, characterized in that the entitlements intended for the slave decoder are renewed more frequently than the entitlements intended for the master decoder.

3. A method as claimed in claim 2, characterized in that the entitlements intended for the slave decoder are renewed at least once a week.

4. A method as claimed in claim 1, characterized in that there is a single entitlement management message which is intended for the master decoder to update the entitlements of several slave decoders.

5. A television system comprising a transmitter (20) and a plurality of receiver installations (1-6), one of which is conceived for receiving pay-TV broadcasts, and having at least a decoding/descrambling member referred to as decoder (19), provided with a reader (18) for a microprocessor card (31) referred to as smart card used for storing, inter alia, data relating to the entitlements of a user, the transmitter comprising a management device (13) which generates and transmits entitlement management messages over the air, characterized in that
- it comprises, in one and the same dwelling, a master decoder and at least one slave decoder intended for use in this dwelling,
- the management device (13) is provided with means for supplying an entitlement management message intended for the master decoder and protected by a cryptographic means, which message can be exploited only by the master decoder and which contains, inter alia, an identification number of the master decoder and data relating to the entitlements and comprising those of a slave decoder,
- the master decoder is provided with means for starting a cryptographic process in association with the master smart card when it receives this message for authenticating and decrypting the entitlement management message and loading it into the master smart card, and means for writing the slave entitlements on a slave card when such a card is inserted into the master decoder.

6. A television receiving apparatus provided with a reader (18) for a microprocessor card (31) referred to as smart card, in which the smart card is used for storing, inter alia, entitlement management messages transmitted by a transmitter and protected by a cryptographic means, which messages can only be exploited in association with the smart card for which they are intended and which contain, inter alia, an identification number of the receiving apparatus and data relating to the entitlements, the receiving apparatus being provided with means for starting a cryptographic process in association with the smart card when it receives such a message for authenticating and decrypting the entitlement management message and loading it into the smart card, characterized in that the entitlement management message being able to contain also the entitlements for another apparatus referred to as slave apparatus and associated with another smart card, referred to as slave smart card, the apparatus is provided with means for writing the entitlements of the slave receiving apparatus into the slave smart card.
